Europäisches Patentamt

European Patent Office

Office européen des brevets

(19)

(11) Publication number: **0 083 814**
**B1**

(12) **EUROPEAN PATENT SPECIFICATION**

(45) Date of publication of patent specification: **20.08.86**

(21) Application number: **82201568.1**

(22) Date of filing: **09.12.82**

(51) Int. Cl.⁴: **F 16 K 17/04, H 01 F 27/40, B 65 D 43/08**

(54) **Pressure relief device.**

(30) Priority: **07.01.82 US 337731**

(43) Date of publication of application:
**20.07.83 Bulletin 83/29**

(45) Publication of the grant of the patent:
**20.08.86 Bulletin 86/34**

(84) Designated Contracting States:
**AT BE CH DE FR GB IT LI LU NL SE**

(56) References cited:
**GB-A-2 046 407**
**US-A-2 752 942**
**US-A-3 113 172**
**US-A-3 164 164**
**US-A-3 217 082**

(73) Proprietor: **QUALITROL CORPORATION**
**1385 Fairport Road**
**Fairport New York 14450 (US)**

(72) Inventor: **Johnson, Wendell David**
**266 Weymouth Drive**
**Rochester New York 14625 (US)**

(74) Representative: **van der Beek, George Frans et al**
**Nederlandsch Octrooibureau Johan de Wittlaan 15 P.O. Box 29720**
**NL-2502 LS 's-Gravenhage (NL)**

Courier Press, Leamington Spa, England.

1      **0 083 814**      2

## Description

This invention relates to a pressure ralief device adapted to be mounted on tank (16) having an opening (14) in an end wall (15) and comprising a ring (23) surrounding said opening (14), said ring having a gasket (3) made of elastic materials in a peripheral recess (5), in its outer circumference, and a valve closure member (41), in cup form, adapted to rest and seal with its disk-part on the level end face of said ring with a sealing gasket (25) between these parts in the closing position of said closure member (41), a peripheral flange part (51), of said closure member (41), engaging around said ring (23) and in sealing cooperation with the gasket (3) in the outer circumference of said ring (23), said gasket (3) being arranged for wiping engagement with an inner surface of said flange portion (51), said valve closure member (41), being biased to its closing position by spring means (3g, 4g).

Such device is known from US—A—3.217.082. In this known device there is a circular gasket in the peripheral recess, which gasket provides a pressure tight seal when the valve used in the device is in closed or seated position. Because dimensional tolerances of the gasket and the groove in which it is positioned, may be difficult to accurately establish, coupled with variation in the durometer factor of the gasket, such a sealing arrangement can result in erratic operational performance of the device.

Thus the purpose of the present invention is to provide for improvement in operational performance of a pressure relief device which incorporates the subject invention.

A more specific purpose is to provide an improvement in a gasket seal arrangememt used in a pressure relief device, which gasket seal arrengement avoids the shortcomings of prior art gasket seal arrangements designed for similar purposes.

To reach these purposes, a pressure relief device as indicated in the preamble above is, according to the invention, characterised in that the gasket (3) in the outer circumference of said ring (23) has a flat cross-section, said peripheral recess (5) and said flange portion (51) being arranged such that said gasket (3) is in a flexed position when said valve closure member (41) is in its closed position in such a way that the flexion of the gasket (3) extends substantially over the whole radial width and said gasket (3) is in an unflexed position when said valve closure member (41) is in its opened position.

This gives a better operational performance without the necessity of very narrow tolerances in dimensions and hardness of the gasket.

It is remarked that from GB—A—2.046.407 a pressure relief valve device is known, in which the only sealing is provided by a gasket in a peripheral recess in a casing, said gasket sealing against a cylindrical outer surface of a valve body movable axially therein. The gasket is a usual O-ring, but to prevent its creeping and being pushed into the narrow clearance gap between the two surfaces to be mutually sealed and thus to prevent its rapid wear a resiliently deformable, mainly flat and plain thrust ring is provided in the groove in contact with one wall thereof and with the O-ring. Under fluid pressure at the seal, the O-ring will compress this thrust ring and reduce its internal diameter to close said gap against entry of part of the O-ring therein.

Preferably, the invention is realized in such a way that the width of the inner region of the peripheral recess (5) for receiving said gasket (3) in the outer circumference of said ring (23) is substantially equal to the thickness of said gasket and the width of the outer region of said recess (5) is greater than the thickness of said gasket (3).

IN THE DRAWINGS:

Fig. 1 is a vertical cross-section view of a pressure relief device of the invention, the valve being shown in its closed position and shown mounted upon an enclosed container of a power transformer.

Fig. 2 is an enlarged partial section view of a sealing arrangement incorporating the invention, showing a valve of the device in closed position; and

Fig. 3 is the same, but showing the valve in open, or operative position.

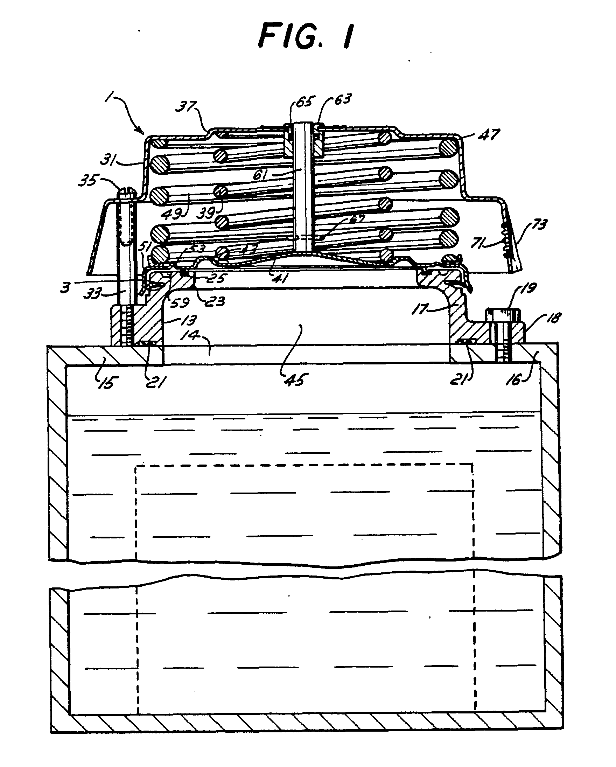

In Fig. 1 is shown a tubular body having a lower portion or base 13, preferably circular in horizontal cross section, which is mounted in surrounding relation to a circular aperture or opening 14 in the top wall 15 of a housing or tank 16 to which the device is attached. Within the housing 16 is the high voltage transformer (indicated by dotted lines) immersed in insulating oil. The lower end of the lower portion 13 is provided with a laterally extending mounting flange 17 having appropriate slots 18 for receiving bolts 19 or other clamping means for rigidly mounting the valve on the outside of the tank. To provide a pressure seal mounting for the base 13, a circular gasket 21 is imbedded in its lower edge bearing down on the surface of the wall 16 of the tank.

The tubular base 13 narrows on its inner surface from the tank aperture 14 to a level ring 23. Imbedded in the upper surface of the level ring 23 near its inner circumference is a circular gasket 25, and imbedded in the outer circumference of the level ring 23 is a flat sealing gasket 3.

An upper housing or cap 31 is mounted on the base 13 by means of studs 33 and shoulder screws 35. The top of the upper housing or cap 31 has an annular ridge 37 which is used to position one end of an inner spring 39.

The opposite end of the inner spring 39 rests on the upper surface of valve disk 41 which has a shallow cup form with an inner annular ridge 43 aligning it with the lower end of the inner spring 39. The outer edge of the valve disk 41 rests on the gasket 25 when the valve disk is in its sealing position as illustrated in Fig. 1, thus closing or sealing off the pressure relief opening 45.

The upper housing or cap 31 is formed so that

2

its top and flange meet to form the annular corner 47 which secures and positions the upper end of an outer spring 49. The lower end of the outer spring 49 compresses against the upper suface of valve disk 41, the upper surface of which has an outer annular ridge 53 for receiving the lower end of the outer spring 49. In its normal rest position the valve disk 41 has its inner edge compressed against the circular gasket 2 and the laterally and downwardly extending flange 51 of the disk 41 abuts the flat sealing gasket 3 to provide a pressure tight seal around the outer circumference of the level ring 23 of the base 13. The valve disk 41 is made of light sheet metal, therefore having relatively low inertia and low resistance to quick starting movement in an opening direction.

On the upper surface of the level ring 23, intermediate its outer circumference and the circular gasket 25, is an annular recess which, in conjuction with the lower surface of the disk 41 and the circular gasket 25, as well as flat sealing gasket 3 form an outer chamber 59 which is substantially pressure tight.

To provide a visible signal for indicating the fact that the relief valve has operated or "blown", a bright colored flag member 61, preferably in the form of cylindrical rod of plastic material, is slidably mounted in a sleeve 63 secured to an aperture in the centre of the upper housing 31. An O-ring 65 serves the dual function of providing a moisture seal and of holding flag 61 frictionally in any particular position to which it has been operated, while a cotter pin 67 projecting radially from the flag 61 near its lower end prevents the flag 61 from being completely withdrawn through upper housing 31. Whenever the pressure relief valve is operated by the raising of the valve disk 41, the flag 61 is forced through the sleeve 63 to protrude above the upper surface of upper housing 31. Although the relief valve mechanism rests itself automatically when pressure conditions return to normal, the signal flag 61 is not reset automatically but is held by the O-ring 65 in its ·attention-attracting position until manually reset. Thus an attendant, making periodic inspections of the apparatus, is apprised of the fact that the relief valve has operated or "blown" since his last visit, even though conditions might again be normal at the moment.

In addition to the visible flag 61, it is frequently desired to have an indication of relief valve operation given at a remote point. To that end, the upper housing 31 is provided with an aperture 71 through which may be mounted a remote switching mechanism such as explained below. However, if remote indications through an electric circuit are not wanted, the switch mechanism is omitted entirely when assembling the device, and the aperture 71 in upper housing 31 is enclosed by a conventional plug 73 (of the familiar kind used in closing unwanted holes in electric junction boxes, etc.) to prevent rain from passing through the aperture 73 and possibly freezing on the movable members of the relief valve.

It should be noted that in the construction just described there are not parts of the valve which extend into the tank or limit the size of the relief valve opening 45 other than the sealing surface of the valve disk 41.

It will now be assumed that the preferred form of the relief valve illustrated in Fig. 1 has been designed for and assembled on the top of a transformer tank in which a pressure of 10 p.s.i. is considered critical, the valve being designed to operate and relieve tank pressure whenever the pressure within the tank rises to this level. It will further be assumed that the surface area of the valve disk 41 exposed to the pressure within the tank is equivalent to 193.5 cm$^2$ (30 square inches) and that the surface area of the valve disk 41 which is exposed to any pressure present in outer chamber 59 is approximately 129 cm$^2$ (20 square inches) and, further, that the heavier outer spring 49 is designed to exert a force of 85.7 kgf (189 pounds) against the upper surface of valve disk 41, while the lighter inner spring 39 is designed to exert a force of 50.3 kgf (111 pounds) against the upper surface of the valve disk 41. The combined force of both the inner spring 39 and the outer spring 49 combine to seal the valve disk 41 against the flat sealing gasket 3. Since the combined force of both springs is equivalent to 136 kgf (300 pounds), and since the area of valve disk 41 exposed to the pressure of the transformer tank is equivalent to approximately 193.5 cm$^2$ (30 square inches), it can be seen that the valve disk 41 will remain tightly sealed until the pressure witin the tank reaches a level of 68.9 kPa (10 pounds per square inch).

When the critical pressure of 68.9 kPa (10 p.s.i.) is reached within the tank, the seal between the outer edge of the valve disk 41 and the circular gasket 25 begins to weaken and the pressure from the tank begins to leak into the outer chamber 59. The gas leaking into this outer chamber is under the same pressure as the gas in the tank, namely, 68.9 kPa (10 p.s.i.), and this pressure leaking into the outer chamber 59 is maintained momentarily in outer chamber 59 by virtue of the sealing effect caused by the valve disk 41 and by virtue of the pressure seal provided by the abutting of the flange 51 of the disk 41 against the gasket 3.

It will be noted that this structure has been previously described in US—A—3.217.082 which device is similar in all respects — except for the subject invention — as the Fig. 9 embodiment disclosed in said patent.

The primary difference between the device of this invention vis-a-vis that of US—A—3.217.082 is in the outer sealing gasket. As seen in that patent, a sealing gasket in the form of an "O" ring (27) is used in the device of said patent.

In the subject invention a sealing gasket 3 is used, which has a different configuration as well as operating characteristics in comparison with the "O" ring gasket (27).

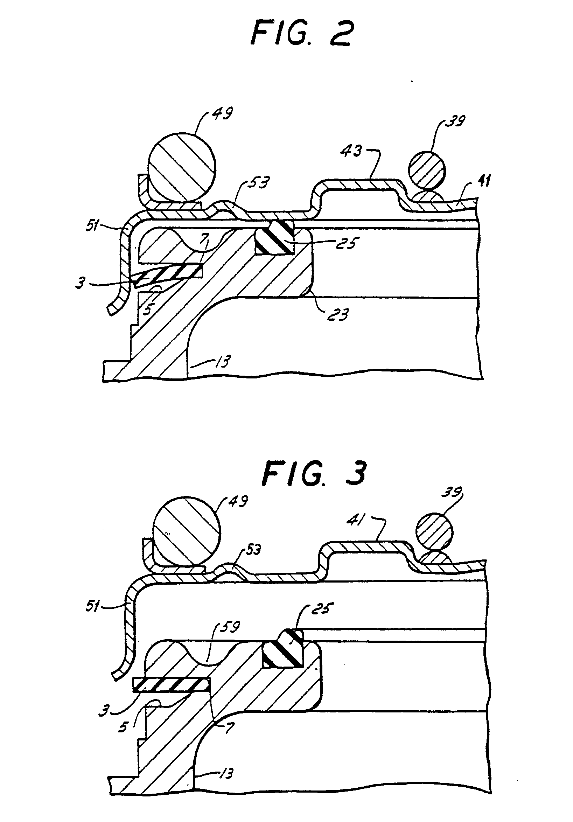

As best seen in Figs. 2 and 3, gasket 3 is flat, similar to a sealing gasket used for many years in mason type glass canning jars. The gasket 3 is positioned in a recess of the level ring 23, an upper surface of the recess being flat, while the width of the outer region of the recess is greater than the thickness of gasket 3, the width of the inner region of the recess being substantially equal to the thickness of gasket 3. The gasket may be formed of rubber or any conventional gasket material.

The inner edge of the gasket is maintained in a circumferential groove 7 formed in the recess 5. The outer periphery of the gasket projects beyond the wall of the level ring 23 where it is subject to contact by the main closure member 41, to provide "wind shield wiper" action for maintaining pressure between the closure member and the level ring 23 as the closure member is moved upwardly out of contact with the gasket 25. It will be noted that the gasket will allow less resistance to downward movement or closing of the closure member 41 than upward or opening movement of said member. Accordingly, the gasket arrangement affords improved sealing and quick resealing advantages.

The design of gasket 3 is such that certain factors i.e., dimensional tolerances, compounding, durometer rating, have no effect on the performance of the device on rising pressure. In the ring gasket 27 of US—A—3.217.082, all of such factors, unless accurately controlled, can result in erratic operational performance of the device of the patent.

The gasket arrangement of the present invention thus results, not only in improved operating performance, but in lower manufacturing costs, with reduction of rejects and minimization of product quality control.

## Claims

1. A pressure relief device adapted to be mounted on a tank having an opening in an end wall and comprising a ring surrounding said opening, said ring having a gasket made of elastic material in a peripheral recess in its outer circumference, and a valve closure member in cup form, adapted to rest and seal with its disk-part on the level end of said ring with a sealing gasket between these parts in the closing position of said closure member, a peripheral flange part of said closure member engaging around said ring and in sealing cooperation with the gasket in the outer circumference of said ring, said gasket being arranged for wiping engagement with an inner surface of said flange portion, said valve closure member being biased to its closing position by spring means characterized in that the gasket in the outer circumference of said ring has a flat cross-section, said peripheral recess and said flange portion being arranged such that said gasket is in a flexed position when said valve closure member is in its closed position in such a way that the flexion of the gasket extends substantially over the whole radial width and said gasket is in an unflexed position when said valve closure member is in its opened position.

2. A pressure relief device as in claim 1, characterized in that the width of the inner region of the peripheral recess for receiving said gasket in the outer circumference of said ring is substantially equal to the thickness of said gasket and the width of the outer region of said recess is greater than the thickness of said gasket.

## Patentansprüche

1. Druckentlastungsvorrichtung, die auf einem Tank montierbar ist, der in einer Stirnwand eine Öffnung aufweist, welche Vorrichtung einen die Öffnung umgebenden Ring enthält, der eine Dichtung aus elastischem Material in einer Umfangsnut in seinem Aussenumfang aufweist, und ein becherförmiges Ventilverschlussteil, das mit seinem Platten-Teil auf der Aussenstirnfläche des Ringes unter Zwischenschaltung eines Dichtungsringes zwischen diesen Teilen in der Schliessposition des Schliessteils abgedichtet abstützbar ist, wobei ein Umfangsflanschteil des Schliessteils den Ring umgreift und mit der Dichtung in dem Aussenumfang des Ringes abdichtend zusammenwirkt, welche für den Streifkontakt mit einer Innenfläche des Flanschteils angeordnet ist, wobei das Ventilverschlussteil von Federmitteln in seine Schliesstellung gedrückt wird, dadurch gekennzeichnet, dass die Dichtung in dem Aussenumfang des Ringes einen flachen Querschnitt hat, wobei die Umfangsnut und der Flanschteil derart angeordnet sind, dass die Dichtung ausgelenkt ist, wenn das Ventilverschlussteil sich in seiner Schliessstellung befindet, derart, dass die Auslenkung der Dichtung sich im wesentlichen über die gesamte radiale Breite erstreckt, und die Dichtung nicht ausgelenkt ist, wenn das Ventilverschlussteil sich in seiner geöffneten Position befindet.

2. Druckentlastungsvorrichtung nach Anspruch 1, dadurch gekennzeichnet, dass die Weite des inneren Bereichs der Umfangsnut zur Aufnahme der Dichtung in dem Aussenumfang des Ringes im wesentlichen der Dicke der Dichtung entspricht und die Weite des Aussenbereichs der Nut grösser als die Dicke der Dichtung ist.

## Revendications

1. Dispositif de décharge de pression adapté pour être monté sur une cuve ayant une ouverture dans une paroi terminale et comportant un rebord annulaire entourant cette ouverture, un joint en matière élastique étant monté dans un évidement périphérique de la circonférence extérieure du rebord annulaire, et un élément de fermeture de soupape, en forme de coupe, adapté pour reposer de façon étanche par sa partie discoïdale sur la face terminale plane de ce rebord annulaire, un joint d'étanchéité étant monté entre ces parties dans la position de fermeture de l'élément de fermeture, un rebord périphérique de cet élément de fermeture entourant ce rebord annulaire et coopérant de façon étanche avec le joint monté dans la circonférence extérieure de ce rebord annulaire, ce joint étant disposé pour coopérer en frottement avec une surface intérieure du rebord, l'élément de fermeture de soupape étant rappelé en position de fermeture par des moyens de ressort, caractérisé en ce que le joint monté dans la ciconférence extérieure de rebord annulaire a une section transversale plate, l'évidement périphérique et le rebord étant disposés de telle sorte que le joint soit incurvé lorsque l'élément de fermeture de soupape est fermé de telle manière que la flexion du joint s'étend pratiquement sur toute sa largeur radiale, et que le joint reste plan lorsque l'élément de fermeture de soupape est dans sa position ouverte.

2. Dispositif de décharge de pression selon la revendication 1, caractérisé en ce que largeur de la région intérieure de l'évidement périphérique pour recevoir le joint dans la circonférence extérieure du rebord annulaire est pratiquement égale à l'épaisseur du joint et que la largeur de la région extérieure de cet évidement est supérieure à l'épaisseur du joint.

# FIG. 1

0 083 814

## FIG. 2

## FIG. 3